# EUROPÄISCHE PATENTANMELDUNG

(11) **EP 2 552 114 A2**
(43) Veröffentlichungstag der Anmeldung: **30.01.2013**
(21) Anmeldenummer: 12176136.5
(22) Anmeldetag: 12.07.2012
(51) Int. Cl.: H04N 7/18

(54) **Vorrichtung zum visuellen Überwachen des Durchganges an einem handelsverfügbaren Kassen-PC in einem Einkaufsmarkt**

(30) Priorität: 26.07.2011 DE 202011103715 U
(71) Anmelder: Certus Warensicherungs-Systeme GmbH, 26441 Jever (DE)
(72) Erfinder: Schöbel, Michael, 26419 Schortens (DE); Piwek, Janus, 26542 Sande (DE); Leptin, Mathias, 26655 Westerstede/Ocholt (DE)
(74) Vertreter: Jabbusch, Matthias

(57) **Zusammenfassung**

Bei einer Vorrichtung zum visuellen Überwachen des Durchganges an einem handelsverfügbaren Kassen-PC in einem Einkaufsmarkt, mit wenigstens einer Überwachungskamera, ist vorgesehen, dass die Überwachungskamera mit zumindest einer Digitalisierungs-einrichtung für die aufgenommenen Bilder verschaltet ist, wobei in die Digitalisierungseinrichtung eine Einkaufswagenerkennung integriert ist und wobei die Digitalisierungseinrichtung wenigstens eine mit einer Bildübertragungsleitung des handelsverfügbaren Kassen-PCs kompatible Schnittstelle aufweist.

## Beschreibung

Die Erfindung betrifft eine Vorrichtung zum visuellen Überwachen des Durchganges an einem handelsverfügbaren Kassen-PC in einem Einkaufsmarkt, mit wenigstens einer Überwachungskamera.

In Einkaufsmärkten, insbesondere in Selbstbedienungs-Einkaufsmärkten, werden für die Kunden Einkaufswagen bereitgestellt, in welchen sie die Gegenstände und Waren sammeln können, die sie zu erwerben beabsichtigen. Ein derartiger Einkaufswagen weist regelmäßig einen Warenkorb sowie ein unterhalb des Warenkorbes angeordnetes Ablagegitter auf. Das Ablagegitter des Einkaufswagens dient zur Aufnahme sperriger Waren, beispielsweise zur Aufnahme von Kisten- oder Sackwaren. Das Kassieren der Waren erfolgt in einem Kassenbereich, der regelmäßig dadurch gekennzeichnet ist, dass eine Reihe von Kassen-PCs nebeneinander angeordnet sind, wobei zwischen zwei Kassen-PCs jeweils ein schmaler Durchgang ausgebildet ist.

Durch diesen Durchgang ist der Einkaufswagen hindurchzuführen, wobei die zu erwerbenden Waren auf ein Rollband gelegt werden und mittels eines an dem Kassen-PC angeschlossenen Scanners erfasst werden. Dazu führt das den Kassen-PC bedienende Kassenpersonal sämtliche Waren von Hand an dem Scanner vorbei und kontrolliert, ob sich im Warenkorb und auf dem unteren Ablagegitter des Einkaufswagens Gegenstände befinden, die von dem Kunden nicht auf das Rollband gestellt wurden.

Es kommt jedoch vor, dass Ware im Warenkorb bzw. auf dem unteren Ablagegitter des Einkaufswagens übersehen wird und den Durchgang des Kassen-PCs unbezahlt passiert. Um dieses zu verhindern, sind sowohl Kunden als auch das Kassenpersonal angehalten, die Warenkörbe und die Ablagegitter der Einkaufswagen auf Ware zu kontrollieren. Eine derartige Kontrolle verlangt dem Kassenpersonal ein aufwendiges Erheben von seinem Sitzplatz oder zeitlich abgepasste Blicke in Überwachungsspiegel oder Überwachungskameras ab. Diese Verfahrensweisen wirken sich jedoch nachteilig ermüdend auf das Kassenpersonal aus, so dass eine zuverlässige Kontrolle über Stunden hinweg nicht gewährleistet ist.

Um die Kontrolle der Einkaufswagen, insbesondere ihrer unteren Ablageflächen zu verbessern, ist bereits vorgeschlagen worden, im Kassenbereich eine Überwachungskamera anzuordnen, welche aus einer vorbestimmten Perspektive ein Standbild des Einkaufswagens aufnimmt und auf einen Monitor aufschaltet, der für das Kassenpersonal einsehbar ist. Auf diese Weise ist ein Erheben des Kassenpersonals von seinem Sitzplatz bzw. ein zeitlich abgepasster Blick in einen Überwachungsspiegel oder eine Überwachungskamera nicht mehr erforderlich.

Der Erfindung liegt deshalb die Aufgabe zugrunde, eine Vorrichtung der eingangs genannten Gattung aufzuzeigen, mit der eine beschleunigte und zuverlässige Kontrolle des Warenkorbes und des unteren Ablagegitters eines Einkaufswagens gewährleistet ist.

Diese Aufgabe ist erfindungsgemäß dadurch gelöst, dass die Überwachungskamera mit zumindest einer Digitalisierungseinrichtung für die aufgenommenen Bilder verschaltet ist, wobei in die Digitalisierungseinrichtung eine Einkaufswagenerkennungseinrichtung integriert ist und wobei die Digitalisierungs-einrichtung wenigstens eine mit einer Bildübertragungsleitung des handels-verfügbaren Kassen-PCs kompatible Schnittstelle aufweist.

Die erfindungsgemäße Vorrichtung weist eine Überwachungskamera auf. Mit dieser können fortlaufend Bilder aufgenommen werden, beispielsweise auch dann, wenn Waren mit einem Einkaufswagen durch den Gang zwischen zwei Kassen hindurchgeführt werden. Die Überwachungskamera ist mit einer Digitalisierungs-einrichtung verschaltet, diese digitalisiert fortlaufend die von der Überwachungs-kamera gelieferten Bilder. Erfindungsgemäß ist vorgesehen, dass in die Digitalisierungseinrichtung eine Einkaufswagenerkennungseinrichtung integriert ist. Wird der Digitalisierungseinrichtung von der Überwachungskamera das Bild eines Einkaufswagens zugeleitet, erfolgt eine entsprechende Information an den Kassen-PC. Die Digitalisierungseinrichtung ist dazu erfindungsgemäß mit einer Bildübertragungsleitung des Kassen-PCs verknüpft. Zweckmäßigerweise wird auf dem Kassen-PC eine Darstellung des mit der Kamera aufgenommenen Bildes dargestellt.

In die Digitalisierungseinrichtung ist nach einer ersten Weiterbildung eine Produkterkennung integriert. Diese ermöglicht es, der Bedienperson das Aufstehen und in Augenschein nehmen des Einkaufswagens und insbesondere seiner unteren Ablagefläche abzunehmen. Bei einer Produkterkennung ist der Erkennungsspielraum auf andere Wagen als Einkaufswagen erweitert, z. B. auf Kinderwagen.

Nach einer nächsten Weiterbildung der Erfindung ist vorgesehen, dass in der Produkterkennungseinrichtung Muster von Waren abgelegt. Abgelegte Warenmuster können mit aufgenommenen Warenbildern verglichen werden. Die Kamera nimmt die Waren auf, durch die Digitalisierungseinrichtung werden diese Bilder digitalisiert. Dabei können sie den Mustern entsprechen, die in der Produkterkennungs-einrichtung abgelegt sind. Wird eine Übereinstimmung erkannt, kann diese Information an den Kassen-PC weitergegeben werden. Wird beispielsweise auf dem unteren Boden eines Einkaufswagens eine Kiste Mineralwasser einer bestimmten Marke erkannt, kann diese Information in Menge und Art der Ware auf den Kassen-PC gegeben werden. Damit wird ein automatisches Kassieren der Waren ermöglicht, ohne dass den Kunden hier eine besondere Ansagepflicht an das Personal der Kasse obliegt und ohne dass die Kassierer in längere Diskussionen mit den Kunden zu treten haben.

Die nach einer nächsten Weiterbildung vorgesehene automatisch betätigbare Betätigungseinheit dient der automatischen Umschaltung der Wechselschaltung in eine Haltestellung, in der ein von der Überwachungs-kamera aufgenommenes Standbild auf die Bildübertragungsleitung aufgeschaltet ist. Die manuell betätigbare Betätigungseinheit dient hingegen der manuellen Rückschaltung in eine Schaltergrundstellung, in der ein vom Kassen-PC geliefertes Rechnerbild auf die Bildübertragungsleitung aufgeschaltet ist. Mit der manuell betätigbaren Betätigungseinheit ist insbesondere erreicht, dass von der erfindungsgemäßen Vorrichtung herrührende Funktionsstörungen und Fehlermeldungen besonders bequem durch ein manuelles Betätigen der Wechselschaltung übergangen werden können. Der laufende Kassenbetrieb ist somit durch die erfindungsgemäße Vorrichtung nicht gefährdet. Die Überwachungskamera ist räumlich ist derart angeordnet, dass der Einkaufswagen, insbesondere sein unteres Ablagegitter von der Überwachungskamera in einer vorbestimmten Perspektive aufgenommen wird. Das von der Überwachungskamera aufgenommene und anschließend digitalisierte Standbild wird auf den Monitor aufgeschaltet und dort dauerhaft angezeigt. Auch wenn der Einkaufswagen über den Aufnahmebereich der Überwachungskamera hinausgeschoben wird, bleibt das Bild des Einkaufswagens, insbesondere seines unteren Ablagegitters, auf dem Monitor stehen. Durch den Einsatz der Überwachungskamera und durch das automatische Herstellen eines digitalisierten Bildes des Einkaufswagens wird vorteilhaft erreicht, dass bei jedem Hindurchbewegen eines Einkaufswagens durch einen Durchgang ein Standbild von dem Warenkorb und dem unteren Ablagegitter des Einkaufswagens aufgenommen wird und auf dem Monitor des Kassen-PCs angezeigt wird. Mit der Wechselschaltung wird dem Übersehen von im Warenkorb bzw. auf dem unteren Ablagegitter des Einkaufswagens liegen gebliebener Ware begegnet, ohne dass Funktionsstörungen oder Fehlermeldungen der erfindungsgemäßen Vorrichtung den laufenden Kassenbetrieb behindern. Selbstverständlich liegt es im Rahmen der Erfindung, die Überwachungskamera mit mehreren Monitoren zu verbinden, die an zueinander beabstandet gelegenen Orten aufgestellt sind.

Nach einer Weiterbildung der Erfindung ist die Überwachungskamera und der Erkennungssensor im Durchgang eines handelsverfügbaren Kassen-PCs angeordnet. Mit dieser Anordnung ist gewährleistet, dass das aufgenommene Bild den Warenkorb gemeinsam mit dem unteren Ablagegitter des Einkaufswagens zeigt.

Um durch eine weitere Maßnahme sicherzustellen, dass das Kassenpersonal das von der Überwachungskamera aufgenommene Standbild betrachtet, sieht eine Weiterbildung der Erfindung vor, dass die Steuerung mit einem Bauteil des handelsverfügbaren Kassen-PCs derart verschaltet ist, dass dieses Bauteil mit der automatisch betätigbaren Betätigungseinheit der Wechselschaltung in seiner Funktion blockiert ist. Auf diese Weise ist die erfindungsgemäße Vorrichtung mit dem Kassen-PC derart eng verknüpft, dass die Überwachungskamera nach der Aufnahme eines Bildes von dem unteren Ablagegitter des Einkaufswagens den Kassen-PC in seiner Funktion zumindest einschränkt, vorzugsweise jedoch unterbricht. Durch diese Einschränkung bzw. Unterbrechung der Kassenfunktion ist das Kassenpersonal gezwungen, das von der Überwachungskamera aufgenommene Bild wahrzunehmen. Das Bauteil des Kassen-PCs, dessen Funktion durch die erfindungsgemäße Vorrichtung blockiert wird, ist beispielsweise ein Scanner oder eine Eingabetastatur. Wird beispielsweise vom Kassenpersonal wahrgenommen, dass der Scanner die Preise der vorbeigeführten Waren nicht mehr erfasst, ist das von der Überwachungskamera aufgenommene Bild bereits auf den Kassenmonitor aufgeschaltet und durch das Kassenpersonal einsehbar. Ein anderer Zeitpunkt zum Einsehen eines auf den Kassenmonitor aufgeschalteten Standbildes ist beispielsweise durch eine Blockade beim Öffnen der Kasse oder beim Ausdrucken des Kassenbeleges vorgegeben.

Nach einer anderen Weiterbildung der Erfindung weist die Steuerung wenigstens ein der Wechselschaltung zugeordnetes Zeitverzögerungsglied auf, mit welchem die Aufschaltung des Standbildes auf den Monitor zeitlich begrenzt, beispielsweise für fünf Sekunden, erfolgt. Nach Ablauf der Verzögerungszeit wird das blockierte Bauteil des Kassen-PCs, insbesondere der mit dem Standbild blockierte Monitor, automatisch wieder freigegeben und das Einscannen oder Kassieren kann fortgesetzt werden. Durch eine Betätigung der manuell betätigbaren Betätigungseinheit besteht für das Kassenpersonal die Option, das blockierte Bauteil noch vor Ablauf der im Zeitverzögerungsglied hinterlegten Zeit freizugeben. Die manuell betätigbare Betätigungseinheit weist beispielsweise ein als Taster ausgebildetes Betätigungselement auf.

Um für das Kassenpersonal eine Möglichkeit zu schaffen, an den Kassen auch alternative Transporthilfen, insbesondere die unteren Ablagegitter von Kinderwagen, auf unbezahlte Ware hin kontrollieren zu können, weist die Überwachungskamera wenigstens einen Videobildmodus sowie wenigstens einen Standbildmodus auf, wobei die beiden Betriebsmodi über eine Umschalteinrichtung miteinander verbunden sind. Dabei dient eine manuell betätigbare Betätigungseinheit der Umschaltung der Überwachungskamera in den Videomodus. Die Schaltstellung der Wechselschaltung bleibt von der manuellen Betätigung der Umschalteinrichtung unberührt. Zur Rückschaltung der Überwachungskamera in den Standbildmodus, wird eine automatisch betätigbare Betätigungseinheit vorgeschlagen, die ihren Betätigungsimpuls aus der manuell betätigbaren Betätigungseinheit der Wechselschaltung automatisch erfährt. Die manuell betätigbare Betätigungseinheit der Wechselschaltung sowie die manuell betätigbare Betätigungseinheit der Umschalteinrichtung weisen jeweils ein beispielsweise als Taster ausgebildetes Betätigungselement auf. Diese zwei als Taster ausgebildeten Betätigungselemente sind mit Vorteil in einem für das Kassenpersonal von seinem Sitzplatz aus bequem zu erreichenden Schaltergehäuse zusammengefasst.

Ein Ausführungsbeispiel der Erfindung, aus dem sich weitere erfinderische Merkmale ergeben, ist in der Zeichnung dargestellt. Es zeigen:
- Fig. 1:: eine schematische Draufsicht auf einen Kassenbereich in einem Einkaufsmarkt mit einem Einkaufswagen und zwei Kassentischen; und
- Fig. 2:: ein Blockschaltbild einer erfindungsgemäßen Vorrichtung zum Überwachen des Kassenbereiches gemäß Fig. 1.

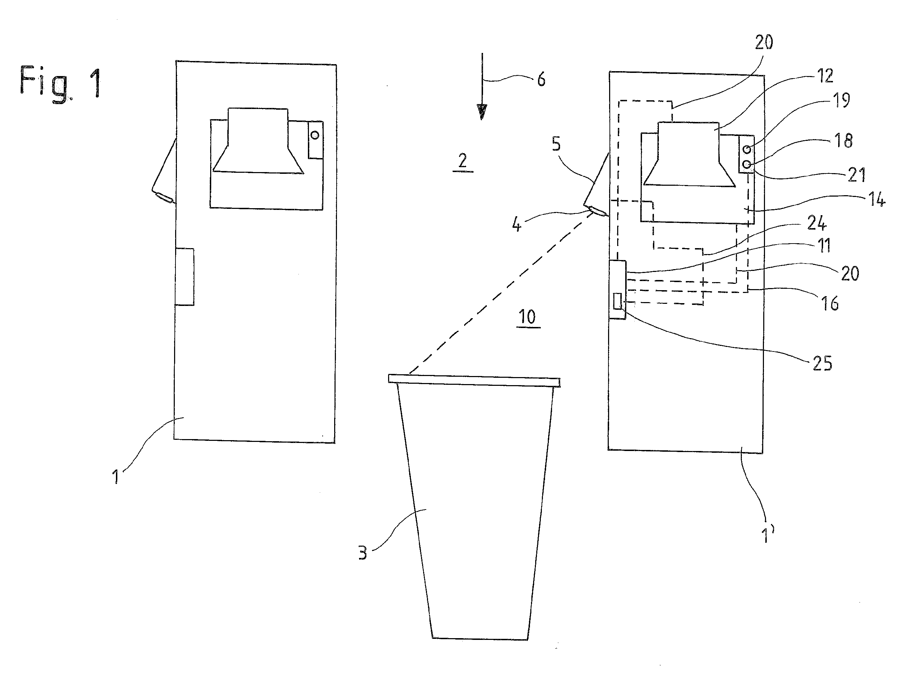

Fig. 1 zeigt die erfindungsgemäße Vorrichtung in einem Einkaufsmarkt mit zwei Kassentischen 1, 1', zwischen denen ein Durchgang 2 mit einem darin befindlichen Einkaufswagen 3 ausgebildet ist. Die erfindungsgemäße Vorrichtung umfasst eine Überwachungskamera 4 mit einem Gehäuse 5, das in einem spitzen Winkel zur Durchgangsrichtung 6 des Durchganges 2 am Kassentisch 1' befestigt ist.

Ein durch den Durchgang 2 entlang des Pfeils 6 geführter Einkaufswagen 3 wird zwangsläufig in ein mit gestrichelter Linie begrenztes Aufnahmefeld 10 der Kamera 4 geführt. Das aufgenommene Bild der Kamera 4 wird über eine Leitung 24 zu einer Digitalisierungseinrichtung 25 geleitet. In dieser werden eingehende Bilder fortwährend digitalisiert. In der Digitalisierungseinrichtung 25 ist eine Produkterkennungseinrichtung integriert. Wird mit der Digitalisierungseinrichtung 25 ein Einkaufswagen 3 und bevorzugt ein Produkt erkannt, erfolgt das Aussenden eines Signals über eine Leitung 26 an eine Steuerung 11.

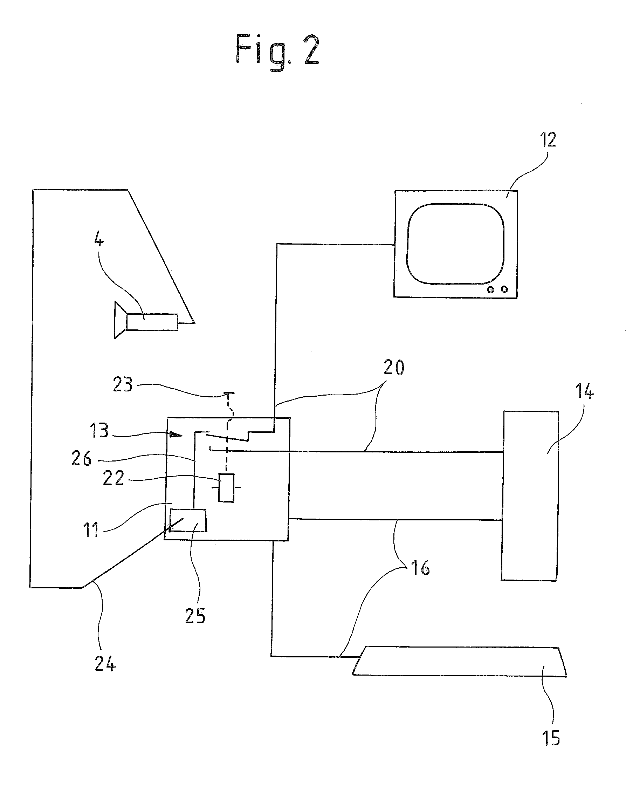

Die Überwachungskamera 4 ist dann über diese Steuerung 11 an einen Kassen-PC 14 angeschlossen, dem ein als gewöhnlicher Kassen-Monitor ausgebildeter Monitor 12 zugeordnet ist. Außerdem weist die Steuerung 11 eine Steuerleitung mit einer in Fig. 2 dargestellten Wechselschaltung auf. Der Wechselschaltung ist ein neben dem Monitor 12 in einem Schaltergehäuse 21 angeordnetes und als Taster ausgebildetes Betätigungselement 19 zum manuellen Umschalten der Wechselschaltung zugeordnet. In dem Schaltergehäuse 21 ist außerdem ein als Taster ausgebildetes Betätigungselement 18 zum manuellen Umschalten der Überwachungskamera 4 in einen anderen Betriebsmodus angeordnet.

Das in der Fig. 2 dargestellte Blockschaltbild zeigt, dass die Überwachungs-kamera 4, die Digitalisierungseinrichtung 25, die Wechselschaltung 13 und der Monitor 12 über die Steuerung 11 miteinander verschaltet sind. Darüber hinaus sind der Kassen-PC 14 und ein Scanner 15 über Datenübertragungsleitungen 16 mit der Steuerung 11 verschaltet. Für die Dauer der Aufschaltung des von der Überwachungskamera 4 aufgenommenen Standbildes auf den Monitor 12 wird die Datenübertragungsleitung 16 durch die Steuerung 11 unterbrochen, so dass der Scanner 15 funktionslos ist. Der Monitor 12 und der Kassen-PC 14 sind über eine Bildübertragungsleitung 20 miteinander verbunden, die über die Steuerung 11 mit der Datenleitung 26 verschaltet ist. Die Wechselschaltung 13 weist eine über die Steuerung 11 automatisch betätigbare Betätigungseinheit 22 sowie eine der Betätigungseinheit 22 entgegenwirkende, manuell betätigbare Betätigungseinheit 23 auf, die an das in Fig. 1 dargestellte Betätigungselement 19 angeschlossen ist. Gleiche Bauteile sind mit gleichen Bezugszahlen versehen.

## Patentansprüche

1. Vorrichtung zum visuellen Überwachen des Durchganges an einem handelsverfügbaren Kassen-PC in einem Einkaufsmarkt, mit wenigstens einer Überwachungskamera,
**dadurch gekennzeichnet,**
**dass** die Überwachungskamera mit zumindest einer Digitalisierungs-einrichtung (25) für die aufgenommenen Bilder verschaltet ist, wobei in die Digitalisierungseinrichtung (25) eine Einkaufswagenerkennung integriert ist und wobei die Digitalisierungseinrichtung (25) wenigstens eine mit einer Bildübertragungsleitung (20) des handelsverfügbaren Kassen-PCs (14) kompatible Schnittstelle aufweist.

2. Vorrichtung nach Anspruch 1, **dadurch gekennzeichnet, dass** in die Digitalisierungseinrichtung (25) eine Produkterkennung integriert ist.

3. Vorrichtung nach Anspruch 2, **dadurch gekennzeichnet, dass** in der Produkterkennungseinrichtung Muster von Waren abgelegt sind.

4. Vorrichtung nach einem der vorhergehenden Ansprüche, **dadurch gekennzeichnet, dass** die Schnittstelle als Wechselschaltung (13) ausgebildet ist und dass eine elektronische Steuerung (11) vorgesehen ist, dass die Wechselschaltung (13) wenigstens eine über die Steuerung (11) automatisch betätigbare Betätigungseinheit (22) sowie wenigstens eine der Betätigungseinheit (22) entgegenwirkende, manuell betätigbare Betätigungseinheit (23) aufweist.

5. Vorrichtung nach einem der vorhergehenden Ansprüche, **dadurch gekennzeichnet, dass** die Überwachungskamera (4) im Durchgang (2) eines handelsverfügbaren Kassen-PCs (14) angeordnet sind.

6. Vorrichtung nach einem der vorhergehenden Ansprüche, **dadurch gekennzeichnet, dass** die Steuerung (11) mit einem Bauteil des handelsverfügbaren Kassen-PCs derart verschaltet ist, dass dieses Bauteil mit der automatisch betätigbaren Betätigungseinheit (22) der Wechselschaltung (13) in seiner Funktion blockierbar ist.

7. Vorrichtung nach Anspruch 6, **dadurch gekennzeichnet, dass** das Bauteil des Kassen-PCs ein Preiserkennungsscanner (15) ist.

8. Vorrichtung nach Anspruch 6, **dadurch gekennzeichnet, dass** das Bauteil des Kassen-PCs eine Preiseingabetastatur ist.

9. Vorrichtung nach einem der vorhergehenden Ansprüche, **dadurch gekennzeichnet, dass** die Steuerung (11) wenigstens ein der Wechselschaltung (13) zugeordnetes Zeitverzögerungsglied aufweist.

10. Vorrichtung nach einem der vorhergehenden Ansprüche, **dadurch gekennzeichnet, dass** die manuell betätigbare Betätigungseinheit (23) wenigstens ein als Taster ausgebildetes Betätigungselement (19) aufweist.

11. Vorrichtung nach einem der vorhergehenden Ansprüche, **dadurch gekennzeichnet, dass** die Überwachungskamera (4) wenigstens einen Videobildmodus sowie wenigstens einen Standbildmodus aufweist, und dass der Videobildmodus und der Standbildmodus über eine Umschalteinrichtung miteinander verbunden sind.
